# EUROPÄISCHE PATENTSCHRIFT

(11) **EP 0 910 674 B1**
(45) Veröffentlichungstag und Bekanntmachung des Hinweises auf die Patenterteilung: **10.10.2001**
(21) Anmeldenummer: 97929018.6
(22) Anmeldetag: 09.07.1997
(51) Int. Cl.: C21B 13/14

(54) **VERFAHREN ZUM ERZEUGEN EINES FÜR EINE REDUKTION VON METALLERZ DIENENDEN REDUKTIONSGASES**
PROCESS FOR PRODUCING A REDUCTION GAS FOR REDUCTION OF METAL ORE
PROCEDE POUR PRODUIRE UN GAZ REDUCTEUR SERVANT A LA REDUCTION DE MINERAI METALLIQUE

(30) Priorität: 10.07.1996 AT 122796
(43) Veröffentlichungstag der Anmeldung: 28.04.1999
(73) Patentinhaber: DEUTSCHE VOEST-ALPINE INDUSTRIEANLAGENBAU GMBH, 40219 Düsseldorf (DE)
(72) Erfinder: KEPPLINGER, Leopold, Werner, A-4060 Leonding (AT); WURM, Johann, A-4283 Bad Zell (AT); MIZELLI, Herbert, A-4563 Micheldorf (AT); KASTNER, Walter, Rainer, A-4180 Zwettl a.d. Rodl (AT); BRUNNBAUER, Günther, A-4702 Wallern (AT)
(74) Vertreter: Kopecky, Helmut, Dipl.-Ing.
(86) Internationale Anmeldenummer: AT9700157
(87) Internationale Veröffentlichungsnummer: WO9801587

(56) Entgegenhaltungen:
- EP-A- 0 122 239
- EP-A- 0 179 734
- FR-A- 766 167
- FR-A- 2 236 951
- FR-A- 2 272 177
- US-A- 5 185 032
- PATENT ABSTRACTS OF JAPAN vol. 007, no. 147 (C-173), 28.Juni 1983 & JP 58 058206 A (SUMITOMO KINZOKU KOGYO KK), 6.April 1983,

## Beschreibung

Die Erfindung betrifft ein Verfahren zum Erzeugen eines für eine Reduktion von stückigem Metallerz, insbesondere Eisenerz, dienenden heißen, CO und H₂ enthaltenden Reduktionsgases, wobei das Reduktionsgas durch unter Sauerstoffzufuhr stattfindendes Vergasen von Kohlenstoffträgern, insbesondere Kohle, in einer Vergasungszone gebildet und anschließend auf eine für den Reduktionsprozeß günstige Reduktionsgastemperatur gekühlt wird, sowie eine Anlage zur Durchführung des Verfahrens.

Ein Verfahren der eingangs beschriebenen Art ist beispielsweise aus der DE-C - 30 34 539 und der EP-B - 0 114 040 bekannt. Bei diesen bekannten Verfahren wird aus zumindest vorreduziertem Eisenschwamm in einer Einschmelzvergasungszone unter Zufuhr von Kohlenstoffträgern und sauerstoffhältigem Gas Roheisen oder ein Stahlvorprodukt erschmolzen und ein CO- und H₂-hältiges Reduktionsgas erzeugt. Das in der Einschmelzvergasungszone entstehende Reduktionsgas weist eine Temperatur im Bereich von 1000 bis 1200°C auf. Dabei werden die freigesetzten Kohlenwasserstoff-Verbindungen zersetzt. Gleichzeitig sinken aufgrund dieser Temperaturen die CO₂- und H₂O-Gehalte auf unter 6 % CO₂ und 4 % H₂O, weil sie zu CO und H₂ umgewandelt werden.

Dieses sehr heiße Reduktionsgas muß zur Verwertung in einem Reduktionsreaktor vor dem Einleiten in den Reduktionsreaktor gekühlt werden. Hierzu ist beispielsweise gemäß der DE-C - 30 34 539 ein Einspritzkühler mit einem nachgeordneten Waschturm vorgesehen. Der so gekühlte Teil des Reduktionsgases wird dem aus der Einschmelzvergasungszone austretenden Reduktionsgas zugemischt. Diese üblicherweise durchgeführte Kühlung des Reduktionsgases mit arteigenem gekühltem Reduktionsgas auf etwa 700 bis 900°C verhindert, daß es während der Reduktion des Erzes zu einem Anschmelzen der Erzpartikel in der Reduktionszone kommt, ohne daß jedoch das Reduktionspotential für das Reduktionsgas reduziert wäre.

Nachteilig ist jedoch. daß das so gekühlte Reduktionsgas thermodynamisch instabil ist; es bildet sich aus dem Kohlenmonoxid Kohlendioxid und Kohlenstoff gemäß dem Boudouard-Gleichgewicht, ebenso wie gemäß dem heterogenen Wassergas-Gleichgewicht eine Umsetzung von Kohlenmonoxid mit Wasserstoff zu Wasser und Kohlenstoff erfolgt, welche Umsetzung so wie die zuerst beschriebene Umsetzung ebenfalls exotherm ist. Dies führt zu einer Erhöhung der Temperatur des Reduktionsgases und damit zu einer Erhöhung der Temperatur des Schachtmaterials. Es kommt zur Bildung von Agglomeraten. Hierdurch ist nicht nur der Reduktionsprozeß gestört, sondern auch das Ausbringen des Schachtmaterials aus der Reduktionszone.

Aus der FR-A-2 236 951 ist ein Verfahren bekannt, bei dem das in einem Elektroofen gebildete heiße Reduktionsgas in einen direkt über dem Elektroofen befindlichen Reduktionsschacht eingeleitet wird und beim Eintritt in den Reduktionsschacht durch Einblasen von Wasser, Wasserdampf, Kohlendioxid, Kohlenwasserstoffen oder anderen Kühlmedien gekühlt wird, um ein Agglomerieren von metalloxidhältigem Materials im Reduktionsschacht zu verhindern. Der CO₂- und H₂O-Gehalt des so gekühlten Reduktionsgases ist relativ hoch.

In der FR-A-766 167 ist ein Verfahren beschrieben, bei dem das in einem Schmelzaggregat gebildete heiße Reduktionsgas direkt in eine Reduktionskammer eingeleitet wird, wobei es im Dombereich des Schmelzaggregats, d.h. noch vor dem Einleiten in die Reduktionskammer, entweder durch Einleiten von verbrauchtem Reduktionsgas nach Entfemen von Kohlensäure oder durch Einleiten einer Mischung aus Kohlensäure oder Wasserdampf und Kohle gekühlt wird, um das Agglomerieren des Einsatzmaterials in der Reduktionskamer zu verhindern.

In der US-A- 5 185 032 ist ein Verfahren beschrieben, bei dem das in einem Einschmelz vergaser gebildete heiße Reduktionsgas durch Einspritzen von Wasser auf eine Temperatur von 900-950°C gekühlt wird.

Die Erfindung bezweckt die Vermeidung dieser Nachteile und Schwierigkeiten und stellt sich die Aufgabe, ein Verfahren der eingangs beschriebenen Art sowie eine Anlage zur Durchführung des Verfahrens zu schaffen, welche die Erzeugung eines Reduktionsgases ermöglichen, das in einem Temperaturbereich liegt, der für die Reduktion des Metallerzes günstig ist, also unterhalb der Temperatur, bei der Anschmelzungen und Verschweißungen (Bildung von Agglomeraten) im zumindest teilreduzierten Metallerz auftreten können. Zudem soll der H₂O/CO₂-Gehalt des Reduktionsgases optimiert und weiters ein chemischer Angriff auf metallische Werkstoffe der gasführenden Systeme, d.h. Reaktoren und Gasförderleitungen, Einbauten etc., vermieden werden.

Diese Aufgabe wird bei einem Verfahren der eingangs beschriebenen Art dadurch gelöst, daß einer keine Zugabe von H₂O/CO₂ zum Reduktionsgas bewirkenden Kühlung unterzogenes Reduktionsgas durch Zugabe von H₂O und/oder CO₂ - zwecks Unterbindung der Boudouard- und heterogenen Wassergas-Reaktion und einer damit verbundenen Aufheizung des Reduktionsgases und damit auch des Metallerzes - in ein bei der Reduktionsgastemperatur thermodynamisch stabileres Reduktionsgas überführt wird.

Durch die gezielte Zugabe von H₂O und/oder CO₂ wird die thermodynamisch bedingte Zersetzung der Reduktanten CO und H₂ gezielt beeinflußt bzw. verhindert. Es werden Konzentrationsbereiche im Reduktionsgas eingestellt, bei denen die stark exotherme Boudouard- und heterogene Wassergas-Reaktion unterdrückt wird, so daß es zu keinem störenden Temperaturanstieg des Reduktionsgases kommen kann. Gleichzeitig wird damit der Oxidationsgrad des Reduktionsgases kontrolliert und der chemische Angriff auf metallische Werkstoffe unterdrückt.

Vorteilhaft erfolgt die Zugabe von H₂O und/oder CO₂ in einer Menge, bis das Boudouard- und heterogene Wassergas-Gleichgewicht des Reduktionsgases bei der für den Reduktionsprozeß günstigen Temperatur annähernd erreicht ist.

Vorzugsweise kann das Kühlen des Reduktionsgases durch Einspeisen von arteigenem Kühlgas und/oder Topgas erfolgen.

Zweckmäßig erfolgt die Zugabe von H₂O durch Einspeisen von Wasserdampf sowie die Zugabe von CO₂ durch Einspeisen eines CO₂-hältigen Gases.

Das Einleiten von CO₂ in das Reduktionsgas kann gemäß einer bevorzugten Ausführungsform zumindest zum Teil dadurch erfolgen, daß bei einem Reduktionsprozeß des Metallerzes umgesetztes Reduktionsgas, sogenanntes Topgas, in das Reduktionsgas eingespeist wird. Auch andere CO₂-hältige Gase, z.B. aus einer CO₂-Reinigung, können eingesetzt werden.

Um eine intensive Abkühlung des Reduktionsgases zu erzielen, wird dem Reduktionsgas vorteilhaft, wie aus dem Stand der Technik an sich bekannt, arteigenes gekühltes Reduktionsgas zugemischt und erfolgt die Zugabe von H₂O und/oder CO₂ in das arteigene gekühlte Reduktionsgas.

Eine Anlage zur Durchführung des Verfahrens mit mindestens einem Reduktionsreaktor, in den eine Förderleitung für Metallerz sowie eine Reduktionsgas-Leitung münden, mit einem Vergasungsreaktor, in den Zuleitungen für Kohlenstoffträger und sauerstoffhältige Gase münden und von dem die Reduktionsgas-Leitung ausgeht, und mit einer in der Reduktionsgas-Leitung vorgesehenen, keine Zugabe von H₂O/CO₂ zum Reduktionsgas bewirkenden Kühleinrichtung ist dadurch gekennzeichnet, daß eine CO₂-Quelle und/oder H₂O-Quelle leitungsmäßig mit der einer Kühlung unterzogenes Reduktionsgas führenden Reduktionsgas-Leitung verbunden ist (sind).

Vorteilhaft ist der Reduktionsreaktor mit einer umgesetztes Reduktionsgas ableitenden Topgas-Ableitung versehen, von der eine Zweigleitung ausgeht, die leitungsmäßig mit der Reduktionsgas-Leitung verbunden ist.

Eine weitere bevorzugte Ausführungsform ist dadurch gekennzeichnet, daß von der Reduktionsgas-Leitung eine Reduktionsgas-Rückführleitung über einen Wäscher und einen Verdichter wieder in die Reduktionsgas-Leitung, jedoch in Gasströmungsrichtung vor der Abzweigung der Reduktionsgas-Rückführleitung, mündet, insbesondere vor Anordnung einer in der Reduktionsgas-Leitung vorgesehenen Entstaubungseinrichtung, und daß eine CO₂-Quelle und/oder H₂O-Quelle mit der Reduktionsgas-Rückführleitung verbunden ist..

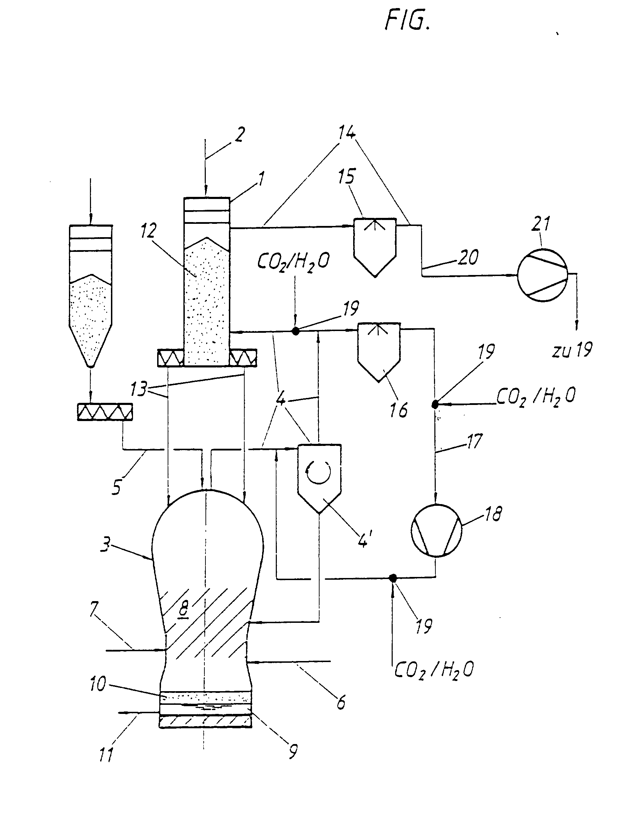

Die Erfindung ist nachfolgend anhand eines in der Zeichnung schematisch dargestellten Ausführungsbeispieles näher erläutert, wobei die Figur eine vorteilhafte Ausführungsform einer erfindungsgemäßen Anlage in schematischer Darstellung zeigt.

In einen ersten, einen Reduktionsreaktor 1 bildenden Schachtofen wird von oben über eine Fördereinrichtung, wie eine Förderleitung 2, stückiges Eisenerz und/oder Eisenerz in Pelletform über ein nicht dargestelltes Schleusensystem, gegebenenfalls zusammen mit Zuschlagstoffen, unter Bildung eines bewegten Festbettes, chargiert.

Unter bewegtem Festbett wird ein sich kontinuierlich bewegender Materialstrom verstanden, dessen sich bewegende Teilchen mit einem strömenden Reduktionsgas in Kontakt gelangen.

Vorzugsweise kommt ein sich kontinuierlich infolge Schwerkraftwirkung nach unten bewegender Materialstrom zur Anwendung.

Als Reduktionsreaktor kann anstelle eines Schachtofens 1 auch ein Reaktor mit Wanderrost oder ein Drehrohrofen vorgesehen sein.

Der Schachtofen 1 steht mit einem Einschmelzvergaser 3 in Verbindung, in dem aus festen Kohlenstoffträgern, wie Kohle, und sauerstoffhältigem Gas ein Reduktionsgas erzeugt wird, welches über eine Leitung 4 dem Schachtofen 1 zugeführt wird, wobei in der Leitung 4 gegebenenfalls eine Gasreinigungseinrichtung 4' für eine Trocken-Entstaubung vorgesehen ist.

Der Einschmelzvergaser 3 weist eine Zuleitung 5 für feste Kohlenstoffträger, eine Zuleitung 6 für sauerstoffhältige Gase sowie gegebenenfalls Zuleitungen 7 für bei Raumtemperatur flüssige oder gasförmige Kohlenstoffträger, wie Kohlenwasserstoffe, sowie für gebrannte Zuschläge auf. In dem Einschmelzvergaser 3 sammelt sich unterhalb der Einschmelzvergasungszone 8 schmelzflüssiges Roheisen 9 und schmelzflüssige Schlacke 10, die über einen Abstich 11 abgestochen werden.

Das im Schachtofen 1 in einer Reduktionszone 12 zu Eisenschwamm reduzierte Eisenerz wird zusammen mit den in der Reduktionszone 12 gebrannten Zuschlägen über eine den Schachtofen 1 mit dem Einschmelzvergaser 3 verbindende Förderleitung 13 zugeführt, beispielsweise mittels Austragsschnecken etc. An dem oberen Teil des Schachtofens 1 schließt eine Topgas-Ableitung 14 für das in der Reduktionszone 12 aus Reduktionsgas entstehende Topgas an.

Das über die Topgas-Ableitung 14 abgezogene Topgas wird zunächst einer Reinigung in einem Wäscher 15 unterzogen, um es möglichst vollständig von Staubpartikeln zu befreien und den Wasserdampfgehalt zu erniedrigen, so daß es dann einer weiteren Verwendung zur Verfügung steht.

Ein Teil des Reduktionsgases wird über einen Wäscher 16 und über eine Rückführleitung 17 mit Verdichter 18 im Kreislauf wieder in die Leitung 4 eingespeist. um das in sehr heißem Zustand aus dem Einschmelzvergaser 3 austretende Reduktionsgas vor Eintritt in die Gasreinigungseinrichtung 4' zu konditionieren, insbesondere auf einen für den Reduktionsprozeß im Schachtofen 1 günstigen Temperaturbereich (etwa 700 bis 900°C) zu kühlen.

Mit 19 sind die wichtigsten Stellen der oben beschriebenen Anlage bezeichnet, bei denen die Möglichkeit der Verbindung mit einer CO₂-Quelle und/oder H₂O-Quelle, insbesondere eine Einspeisung für CO₂- und/oder H₂O-hältige Gase besonders vorteilhaft möglich ist, deren Wirkungsweisen nachfolgend anhand der Beispiele II bis IV näher erläutert werden. Die Einspeisestellen 19 liegen entweder in den Leitungen 4, die den Einschmelzvergaser 3 mit dem Reduktionsreaktor 1 verbinden, oder im Reduktionsgas-Kühlkreislauf 16, 17, 18. Liegt die Einspeisestelle 19 im Kühlkreislauf 16, 17, 18 nach dem Verdichter 18, ergeben sich Vorteile, wie z.B. daß der Verdichter 18 kleiner bemessen sein kann und daß das durch die Verdichtung erwärmte Gas durch die Einspeisung von H₂O und/oder CO₂ gekühlt wird.

Anhand der nachstehenen Beispiele I bis IV ist die Wirkung der erfindungsgemäßen Maßnahmen veranschaulicht. Beispiel I gibt lediglich den Stand der Technik wieder. Bei sämtlichen Werten der Gasanalysen handelt es sich um Volumsprozente.

### Beispiel I:

Gemäß dem Stand der Technik, beispielsweise gemäß der EP-B - 0 114 040, erzeugtes Reduktionsgas weist eine Analyse gemäß nachstehender Tabelle I auf. Das Reduktionsgas verläßt den Einschmelzvergaser 3 mit einer Temperatur von 1050°C unter einem Druck von 4,5 bar abs. Es soll für eine Eisenerzreduktion herangezogen werden.

**Tabelle I**

| | |
|---|---|
| CO | 65 % |
| H₂ | 30 % |
| CO₂ | 1 % |
| H₂O | 1 % |
| CH₄ | 1 % |
| N₂ | 2 % |

Um eine Reduktionsgastemperatur von etwa 850°C zu erzielen, muß dem Reduktionsgas Kühlgas beigemischt werden. Gemäß dem Beispiel I wird artgleiches Kühlgas mit einer Temperatur von 70°C, das ebenfalls einen Druck von 4,5 bar abs. aufweist, beigemengt. Um die Temperatur von 850°C zu erzielen, ist die Zugabe von 27,8 % Kühlgas erforderlich. Hieraus ergeben sich folgende Nachteile:
- Es ist eine sehr große Kühlgasmenge erforderlich, d.h. es muß ein großer Teil des heißen Reduktionsgases abgezweigt und einer energie- und apparateaufwendigen Kühlung unterworfen werden.
- Der Summengehalt an CO₂ und H₂O entspricht nicht dem Gleichgewicht, so daß es nach der Zumischung des Kühlgases auf dem Weg zum Schachtofen 1 zu einem CO- und H₂-Zerfall gemäß den Formeln: 2CO ↔ CO₂ + C (Boudouard-Reaktion) bzw. CO + H, ↔ H₂O + C (heterogene Wassergas-Reaktion) kommt, welcher stark exotherm ist. Hieraus resultiert eine Temperaturerhöhung, so daß es erforderlich sein kann, weiteres Kühlgas zuzuführen. Die Temperaturerhöhung führt zu einer Agglomeratbildung des Schachtmaterials. Weiters kommt es zu einem chemischen Angriff auf die das Reduktionsgas weiterleitenden Rohre, Einbauten etc. aus metallischem Werkstoff. Zudem wird durch die Umsetzung von CO und H₂ die für die Reduktion wirksame Gasmenge verringert.

### Beispiel II:

Einem Reduktionsgas mit der chemischen Zusammensetzung gemäß Tabelle I wird ein CO₂-reiches Gas mit einer Temperatur von 70°C mit einem Druck von 4,5 bar abs. zugeführt. Die Analyse des CO₂-reichen Gases ist in nachstehender Tabelle II wiedergegeben.

**Tabelle II**

| | |
|---|---|
| CO | 13 % |
| H₂ | 2 % |
| CO₂ | 77 % |
| H₂O | 5 % |
| CH₄ | 1 % |
| N₂ | 2 % |

Durch Zugabe von 12,3 % eines artgleichen Kühlgases gemäß Beispiel I und 10,7 % des CO₂-reichen Gases gemäß Tabelle II zum Reduktionsgas gemäß Tabelle I erhält man ein Reduktionsgas mit einer Temperatur von 850°C und einem Druck von 4,5 bar abs., das die in Tabelle III wiedergegebene chemische Zusammensetzung aufweist.

**Tabelle III**

| | |
|---|---|
| CO | 60,5 % |
| H₂ | 27,5 % |
| CO₂ | 7,6 % |
| H₂O | 1,4 % |
| CH₄ | 1,0 % |
| N₂ | 2,0 % |

Bei diesem Reduktionsgas liegt der Summengehalt von CO₂ und H₂O nahe dem Gleichgewichtswert bei 850°C, so daß ein Zerfall von CO und H₂ nahezu vollständig vermieden werden kann. Die Zugabe des CO₂-reichen Gases erfolgt in den Kühlgaskreislauf, beispielsweise in die Rückführleitung 17 gemäß der Figur. Es ist zu erkennen, daß eine wesentliche Verkleinerung des Kühlgaskreislaufes möglich ist, da nur mehr 12,3 % Kühlgas anstelle von 27,8 % Kühlgas gemäß Beispiel I zugesetzt werden müssen. Gemäß Beispiel II ist es möglich, Gase mit niedrigem kalorischem Wert, also CO₂-reiche Gase, sinnvoll einer Verwendung zuzuführen. Bei der Reduktion von Eisenerz mit dem so konditionierten Reduktionsgas wird ein zu starkes Erhitzen des Schachtmaterials zuverlässig vermieden, das reduzierte Material läßt sich ohne Schwierigkeiten in den Einschmelzvergaser 3 überführen.

### Beispiel III:

Gemäß diesem Beispiel wird aus dem Schachtofen 1 abgezogenes Topgas nach einer entsprechenden Reinigung, Kühlung und Verdichtung mit einer Temperatur von 70°C und 4,5 bar abs. dem aus dem Einschmelzvergaser 3 austretenden Reduktionsgas zugemischt. Die chemische Analyse des Topgases ist in nachstehender Tabelle IV wiedergegeben.

**Tabelle IV**

| | |
|---|---|
| CO | 42 % |
| H₂ | 19% |
| CO₂ | 34 % |
| H₂O | 2 % |
| CH₄ | 1 % |
| N₂ | 2 % |

Durch Zumischen von 23,3 % Topgas zum Reduktionsgas wird ein Mischgas mit einer Temperatur von 850°C und einem Druck von 4,5 bar abs. und der in Tabelle V wiedergegebenen chemischen Analyse gebildet. Auch hier ist der Summengehalt von CO₂ und H₂O nahe beim Gleichgewicht, so daß auch hier eine Boudouard- und heterogene Wassergas-Reaktion nahezu vollständig vermieden ist.

**Tabelle V**

| | |
|---|---|
| CO | 60,6 % |
| H₂ | 27,9 % |
| CO₂ | 7,3 % |
| H₂O | 1,2 % |
| CH₄ | 1,0 % |
| N₂ | 2,0 % |

Gemäß Beispiel III ist ebenfalls eine geringere Gasmenge zur Kühlung des aus dem Einschmelzvergaser 3 austretenden Reduktionsgases nötig als gemäß Beispiel I. Die Zumischung des Topgases erfolgt in die Leitungen 4 bzw. 17 über eine von der Topgas-Ableitung 14 zur Leitung 4 rührende Zweigleitung 20, die über einen Verdichter 21 und eine entsprechende Kühlvorrichtung geführt ist, und gegebenenfalls über die Einspeisestellen 19.

### Beispiel IV:

Gemäß Beispiel IV wird artgleichem Kühlgas H₂O-Dampf zugemischt. Die chemischen Zusammensetzungen des den Einschmelzvergaser 3 verlassenden Reduktionsgases und des Kühlgases sind identisch den in Beispiel I angegebenen chemischen Zusammensetzungen.

Der Dampf (100 % H₂O) wird mit einer Temperatur von 250°C und einem Druck von 12 bar abs. zugemischt. Bei Zumischen von 18 % Kühlgas mit 8,5 % Wasserdampf bildet sich Reduktionsgas mit einer Temperatur von 850°C und einem Druck von 4,5 bar abs. Die chemische Analyse des Reduktionsgases ist in nachstehender Tabelle VI wiedergegeben.

**Tabelle VI**

| | |
|---|---|
| CO | 60,7 % |
| H₂ | 28,0 % |
| CO₂ | 0,9 % |
| H₂O | 7,6 % |
| CH₄ | 0,9 % |
| N₂ | 1,9% |

Diese Variante bietet ebenfalls den Vorteil eines klein bemessenen Kühlgaskreislaufes, wobei der Summengehalt an CO₂ und H₂O annähernd im Gleichgewicht liegt. Als zusätzlicher Vorteil ergibt sich hier eine geringe Änderung der Reduktantenmenge.

## Patentansprüche

1. Verfahren zum Erzeugen eines für eine Reduktion von stückigem Metallerz, insbesondere Eisenerz, dienenden heißen, CO und H₂ enthaltenden Reduktionsgases, wobei das Reduktionsgas durch unter Sauerstoffzufuhr stattfindendes Vergasen von Kohlenstoffträgern, insbesondere Kohle, in einer Vergasungszone (8) gebildet und anschließend auf eine für den Reduktionsprozeß günstige Reduktionsgastemperatur gekühlt wird, **dadurch gekennzeichnet, daß** einer keine Zugabe von H₂O/CO₂ zum Reduktionsgas bewirkenden Kühlung unterzogenes Reduktionsgas durch Zugabe von H₂O und/oder CO₂-zwecks Unterbindung der Boudouard- und heterogenen Wassergas-Reaktion und einer damit verbundenen Aufheizung des Reduktionsgases - in ein bei der Reduktionsgastemperatur thermodynamisch stabileres Reduktionsgas überführt wird.

2. Verfahren nach Anspruch 1, **dadurch gekennzeichnet, daß** die Zugabe von H₂O und/oder CO₂ in einer Menge erfolgt, bis das Boudouard- und heterogene Wassergas-Gleichgewicht des Reduktionsgases bei der für den Reduktionsprozeß günstigen Temperatur annähernd erreicht ist.

3. Verfahren nach Anspruch 1 oder 2, **dadurch gekennzeichnet, daß** die Zugabe von H₂O durch Einspeisen von Wasserdampf erfolgt.

4. Verfahren nach einem oder mehreren der Ansprüche 1 bis 3, **dadurch gekennzeichnet, daß** die Zugabe von CO₂ durch Einspeisen eines CO₂-hältigen Gases erfolgt.

5. Verfahren nach Anspruch 3 oder 4, **dadurch gekennzeichnet, daß** bei einem Reduktionsprozeß des Metallerzes umgesetztes Reduktionsgas (z.B. Topgas) in das Reduktionsgas eingespeist wird.

6. Verfahren nach einem oder mehreren der Ansprüche 1 bis 5, **dadurch gekennzeichnet, daß** dem Reduktionsgas arteigenes gekühltes Reduktionsgas zugemischt wird und die Zugabe von H₂O und/oder CO₂ in das arteigene gekühlte Reduktionsgas erfolgt.

7. Anlage zur Durchführung des Verfahrens nach einem oder mehreren der Ansprüche 1 bis 6, mit mindestens einem Reduktionsreaktor (1), in den eine Förderleitung (2) für Metallerz sowie eine Reduktionsgas-Leitung (4) münden, mit einem Vergasungsreaktor (3), in den Zuleitungen (5, 6) für Kohlenstoffträger und sauerstoffhältige Gase münden und von dem die Reduktionsgas-Leitung (4) ausgeht, und mit einer in der Reduktionsgas-Leitung (4) vorgesehenen, keine Zugabe von H₂O/CO₂ zum Reduktionsgas bewirkenden Kühleinrichtung, **dadurch gekennzeichnet, daß** eine CO₂-Quelle und/oder H₂O-Quelle leitungsmäßig mit der einer Kühlung unterzogenes Reduktionsgas führenden Reduktionsgas-Leitung (4) verbunden ist (sind).

8. Anlage nach Anspruch 7, **dadurch gekennzeichnet, daß** der Reduktionsreaktor (1) mit einer umgesetztes Reduktionsgas ableitenden Topgas-Ableitung (14) versehen ist, von der eine Zweigleitung (20) ausgeht, die leitungsmäßig mit der Reduktionsgas-Leitung (4) verbunden ist.

9. Anlage nach Anspruch 7 oder 8, **dadurch gekennzeichnet, daß** von der Reduktionsgas-Leitung (4) eine Reduktionsgas-Rückführleitung (17) über einen Wäscher (16) und einen Verdichter (18) wieder in die Reduktionsgas-Leitung (4), jedoch in Gasströmungsrichtung vor der Abzweigung der Reduktionsgas-Rückführleitung (17), mündet, insbesondere vor Anordnung einer in der Reduktionsgas-Leitung (4) vorgesehenen Entstaubungseinrichtung (4'), und daß eine CO₂-Quelle und/oder H₂O-Quelle mit der Reduktionsgas-Rückführleitung (17) verbunden ist.

## Claims

1. A method for producing a hot CO and H₂-containing reducing gas serving the purpose of reducing lumpy metal ore, in particular iron ore, wherein the reducing gas is formed in a gasification zone (8) by a gasification of carbon carriers, in particular coal, taking place under supply of oxygen and subsequently is cooled down to a reducing-gas temperature favorable to the reduction process, **characterized in that** reducing gas subjected to a cooling which does not cause addition of H₂O/CO₂ to the reducing gas by the addition of H₂O and/or CO₂ - in order to prevent the Boudouard and heterogeneous water-gas reaction and a resultant heating of the reducing gas - is converted into a reducing gas that is thermodynamically more stable at the reducing-gas temperature.

2. A method according to claim 1, **characterized in that** amounts of H₂O and/or CO₂ are added until the Boudouard and heterogeneous water-gas equilibrium of the reducing gas at the temperature favorable to the reduction process is almost attained.

3. A method according to claim 1 or 2, **characterized in that** the addition of H₂O is effected by feeding water vapor.

4. A method according to one or several of claims 1 to 3, **characterized in that** the addition of CO₂ is effected by feeding a CO₂-containing gas.

5. A method according to claim 3 or 4, **characterized in that** reducing gas reacted in a reduction process of the metal ore (f.i. top gas) is fed into the reducing gas.

6. A method according to one or several of claims 1 to 5, **characterized in that** cooled reducing gas of the same type is admixed to the reducing gas and H₂O and/or CO₂ are added to the cooled reducing gas of the same type.

7. A plant for carrying out the method according to one or several of claims 1 to 6, comprising at least one reduction reactor (1), with a conveying duct (2) for metal ore and a reducing-gas duct (4) running into it, and comprising a gasification reactor (3), with feed ducts (5, 6) for carbon carriers and oxygen-containing gases running into it and with the reducing-gas duct (4) departing from it, and comprising a cooling means provided in the reducing-gas duct (4) and not causing addition of H₂O/CO₂ to the reducing gas, **characterized in that** a CO₂ source and/or H₂O source is (are) flow-connected with the reducing-gas duct (4), which carries reducing gas subjected to cooling.

8. A plant according to claim 7, **characterized in that** the reduction reactor (1) is provided with a top-gas discharge duct (14) carrying off reacted reducing gas, from which a branch duct (20) departs that is flow-connected with the reducing-gas duct (4).

9. A plant according to claim 7 or 8, **characterized in that** from the reducing-gas duct (4) a reducing-gas recycle duct (17) via a scrubber (16) and a compressor (18) runs into the reducing-gas duct (4) again, but viewed in the gas flow direction at a position upstream of the branching-off point of the reducing-gas recycle duct (17), particularly upstream of the position of a dedusting means (4') provided in the reducing-gas duct (4), and that a CO₂ source and/or H₂O source is connected with the reducing-gas recycle duct (17).

## Revendications

1. Procédé pour la production d'un gaz de réduction chaud et contenant du CO et du H₂, servant à la réduction de minerai de métal en morceaux, en particulier de minerai de fer, dans lequel le gaz de réduction est formé par gazéification, qui se produit avec apport d'oxygène, de produits d'apport de carbone, en particulier de charbon, dans une zone de gazéification (8) et est ensuite refroidi jusqu'à une température de réduction favorable pour le processus de réduction, **caractérisé en ce qu'**un gaz de réduction, soumis à un refroidissement qui ne provoque aucune addition de H₂O/CO₂ au gaz de réduction, est converti en un gaz de réduction plus stable sur le plan thermodynamique à la température de réduction, par addition de H₂O et/ou de CO₂, dans le but d'empêcher la réaction de Boudouard et la réaction hétérogène du gaz à l'eau, et d'empêcher un échauffement du gaz de réduction relié à cette réaction.

2. Procédé selon la revendication 1, **caractérisé en ce que** l'addition de H₂O et/ou de CO₂ a lieu en une quantité telle que l'on atteint approximativement l'équilibre de Boudouard et de gaz à l'eau hétérogène dans le gaz de réduction à la température favorable pour le processus de réduction.

3. Procédé selon l'une ou l'autre des revendications 1 et 2, **caractérisé en ce que** l'addition de H₂O a lieu par alimentation de vapeur d'eau.

4. Procédé selon l'une ou plusieurs des revendications 1 à 3, **caractérisé en ce que** l'addition de CO₂ a lieu par alimentation d'un gaz contenant du CO₂.

5. Procédé selon l'une ou l'autre des revendications 3 et 4, **caractérisé en ce qu'**un gaz de réduction converti lors d'un processus de réduction du minerai de métal (comme par exemple gaz de gueulard) est alimenté dans le gaz de réduction.

6. Procédé selon l'une ou plusieurs des revendications 1 à 5, **caractérisé en ce que** l'on mélange avec le gaz de réduction un gaz de réduction refroidi de genre propre, et **en ce que** l'addition de H₂O et/ou de CO₂ a lieu dans le gaz de réduction refroidi de genre propre.

7. Installation pour la mise en oeuvre du procédé selon l'une ou plusieurs des revendications 1 à 6, comprenant au moins un réacteur de réduction (1) dans lequel débouchent une conduite d'amenée (2) pour du minerai de métal ainsi qu'une conduite de gaz de réduction (4), comprenant un réacteur de gazéification (3) dans lequel débouchent des conduites d'amenée (5, 6) pour des produits d'apport de carbone et pour des gaz contenant de l'oxygène, et duquel part la conduite de gaz de réduction (4), et comprenant un dispositif de refroidissement, prévu dans la conduite de gaz de réduction (4), qui ne provoque aucune addition de H₂O/CO₂ au gaz de réduction, **caractérisé en ce qu'**une source de CO₂ et/ou une source de H₂O est(sont) reliée(s) à la conduite de gaz de réduction (4) qui mène le gaz de réduction soumis à un refroidissement.

8. Installation selon la revendication 7, **caractérisé en ce que** le réacteur de réduction (1) est pourvu d'une conduite d'évacuation (14) de gaz de gueulard qui évacue un gaz de réduction converti, et de laquelle part une conduite de dérivation (20) reliée à la conduite de gaz de réduction (4).

9. Installation selon l'une ou l'autre des revendications 7 et 8, **caractérisée en ce que** depuis la conduite de gaz de réduction (4), une conduite de retour de gaz de réduction (17), qui passe par un laveur (16) et par un compresseur (18), débouche à nouveau dans la conduite de gaz de réduction (4), mais cependant avant la dérivation, considérée dans la direction d'écoulement du gaz, de la conduite de retour de gaz de réduction (17), en particulier avant l'agencement d'un dispositif de dépoussiérage (4') prévu dans la conduite de gaz de réduction (4), et **en ce qu'**une source de CO₂ et/ou une source de H₂O est reliée à la conduite de retour de gaz de réduction (17).
